Europäisches Patentamt

European Patent Office    (11) Numéro de publication:    **0 282 425**

Office européen des brevets    **A1**

(12)    **DEMANDE DE BREVET EUROPEEN**

(21) Numéro de dépôt: **88420072.6**    (51) Int. Cl.⁴: **E 04 B 1/35**
    **B 64 B 1/00**

(22) Date de dépôt: **26.02.88**

(30) Priorité: **26.02.87 FR 8703196**

(43) Date de publication de la demande:
    **14.09.88 Bulletin 88/37**

(84) Etats contractants désignés:
    **AT BE CH DE ES GB GR IT LI LU NL SE**

(71) Demandeur: **PHENOL ENGINEERING**
    **37 rue de la Liberté**
    **F-38230 Pont-de-Cheruy (FR)**

(72) Inventeur: **Ivorra, Claude**
    **5 rue des Frères Goncourt**
    **F-69330 Meyzieu (FR)**

    **Biondeau-Patissier, Jean-François**
    **42 rue de la Py**
    **F-75020 Paris (FR)**

(74) Mandataire: **Bratel, Gérard et al**
    **Cabinet GERMAIN & MAUREAU B.P. 3011**
    **F-69392 Lyon Cédex 03 (FR)**

(54) Procédé pour le transport aérien de bâtiments préconstruits.

㊴ Ce procédé concerne la construction de bâtiments (1) reposant sur des fondations constituées par au moins une cuve (2).

Le bâtiment (1) est transporté suspendu sous un aérostat (5), et il est posé par l'aérostat (5) sur la cuve (2) préalablement construite et remplie d'un volume d'eau (15), correspondant à la masse du bâtiment (1). L'eau (15) est prélevée dans la cuve (2) et chargée dans ou sous l'aérostat (en 19), pour constituer la charge de retour de cet aérostat (5).

FIG. 4

## Description

"Procédé pour le transport aérien de bâtiments préconstruits"

La présente invention concerne un procédé destiné au transport aérien, jusqu'à leur lieu d'installation définitive, de bâtiments d'habitation ou autres qui sont préconstruits en usine. Le terme "bâtiment" désigne, dans toute la suite, aussi bien un bâtiment complet qu'une partie de bâtiment formant une unité constructive.

Plus particulièrement, cette invention est relative au transport de bâtiments qui reposent finalement sur des fondations constituées, pour un bâtiment, par une ou plusieurs cuves ayant non seulement un rôle d'élément porteur, mais encore des fonctions de stockage et de restitution d'énergie calorifique, la ou chaque cuve étant remplie d'un fluide caloporteur pouvant être chauffé notamment par des capteurs solaires. Le principe d'un tel bâtiment, ainsi que diverses réalisations particulières, sont décrits dans les brevets français N° 2 465 175, N° 2 524 124 et N° 2 524 125 au nom de la Demanderesse.

Par ailleurs, le transport d'habitations au moyen d'aérostats a déjà été envisagé, pour transporter des habitations légères depuis une usine de fabrication de ces habitations jusqu'à leur lieu d'installation définitive, ce qui permet :

- une construction industrielle économique ;
- un transport aisé quel que soit le lieu de destination, ne nécessitant aucune infrastructure routière ;
- une installation très rapide du bâtiment sur son site définitif. (voir demande de brevet français publiée N° 2 132 610).

Un tel mode de construction, et de transport par voie aérienne s'avère, ainsi, particulièrement intéressant pour des bâtiments à ériger dans des sites montagneux, où les difficultés d'accès s'additionnent aux rigueurs climatiques.

Dans le mode de construction et de transport considéré, l'opération la plus délicate est la pose du bâtiment sur son lieu d'installation définitive. En particulier, compte tenu du poids d'un bâtiment, il n'est pas possible que l'aérostat se sépare du bâtiment qu'il transportait, sans que le poids de ce bâtiment soit compensé par une certaine charge servant de lest à l'aérostat, pour son trajet de retour. Ce problème important n'est pas du tout résolu dans le document précédemment cité.

La présente invention a pour but de résoudre le problème de la pose d'un bâtiment par un aérostat utilisé pour son transport, dans le cas d'un bâtiment reposant sur une fondation constituée par une cuve comme indiqué plus haut, en faisant jouer un rôle supplémentaire à la cuve précisément au moment de la pose du bâtiment sur cette cuve.

A cet effet, l'invention a essentiellement pour objet un procédé pour le transport aérien de bâtiments préconstruits, avec utilisation d'un aérostat sous lequel est suspendu le bâtiment à transporter, procédé caractérisé en ce que le bâtiment est posé par l'aérostat sur au moins une cuve servant de fondation à ce bâtiment et installée ou construite sur le sol, qui a été remplie préalablement d'eau, et en ce qu'au moment de la pose du bâtiment sur la cuve, une quantité d'eau correspondant sensiblement à la masse du bâtiment est prélevée dans la cuve et chargée dans ou sous l'aérostat, pour constituer la charge de retour de l'aérostat.

Ainsi, la masse du bâtiment est "échangée" contre une quantité d'eau correspondante, au moment de la pose du bâtiment, ce qui permet à l'aérostat de repartir ensuite sans problèmes vers son lieu de départ. Le procédé proposé est particulièrement économique puisque, dans le cas des bâtiments ici considérés, la cuve doit de toute façon être construite, tandis que l'eau remplissant cette cuve est soit de l'eau amenée par un réseau de canalisations existant, soit de l'eau de pluie recueillie sur le site lui-même.

De toute façon, l'invention sera mieux comprise à l'aide de la description qui suit, et d'autres caractéristiques seront mises en évidence, en référence au dessin schématique annexé illustrant, à titre d'exemple non limitatif, un mode de mise en oeuvre de ce procédé pour le transport aérien de bâtiments préconstruits :

Figure 1 est une vue en perspective, très schématique, d'un bâtiment pouvant être installé par application du procédé objet de l'invention ;

Figure 2 montre le bâtiment suspendu au-dessous d'un aérostat, au cours de son transport ;

Figure 3 illustre la pose du bâtiment sur son site définitif ;

Figure 4 illustre le prélèvement d'eau par l'aérostat, après la pose du bâtiment.

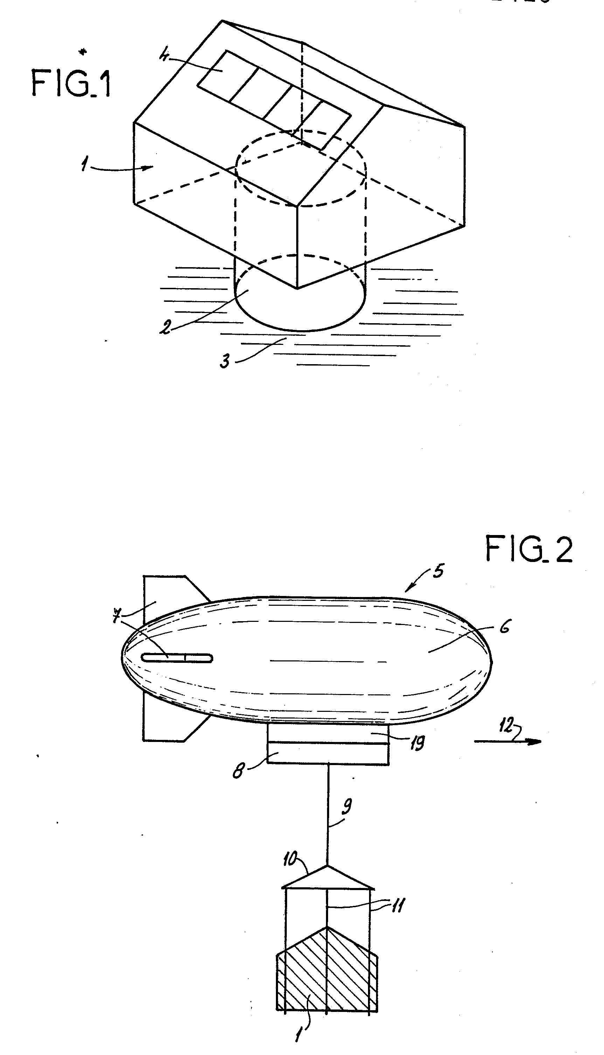

Comme le montre la figure 1, le procédé objet de l'invention concerne un bâtiment 1, tel qu'un bâtiment d'habitation, qui repose sur une cuve cylindrique 2 d'axe vertical, construite sur un sol 3. La cuve 2 sert de fondation au bâtiment 1 ; elle est en outre prévue pour recevoir un fluide caloporteur, pouvant être chauffé par des capteurs solaires 4, de sorte que cette cuve 2 a aussi des fonctions de stockage et de restitution d'énergie calorifique.

La cuve 2 est construite directement sur le sol 3. Quant au bâtiment 1, celui-ci est préconstruit dans une usine située à distance, et transporté par voie aérienne depuis l'usine jusqu'à son site définitif. le transport aérien du bâtiment 1 est assuré par un aérostat 5, comme le montre la figure 2.

L'aérostat 5 comprend un corps principal 6 avec des réservoirs remplis d'hélium, un empennage 7 et une nacelle 8, ainsi que des moteurs de propulsion non représentés. Pour transporter le bâtiment 1, cet aérostat 5 est encore équipé d'un ou plusieurs câbles 9 auxquels est suspendu un palonnier 10, muni d'élingues 11 auxquelles est accroché le bâtiment 1. Un treuil, non représenté, permet de faire descendre ou monter le palonnier 10. Le bâtiment 1 étant suspendu à une distance convenable de la nacelle 8, son transport est assuré par le déplacement de l'aérostat 5 suivant la flèche 12.

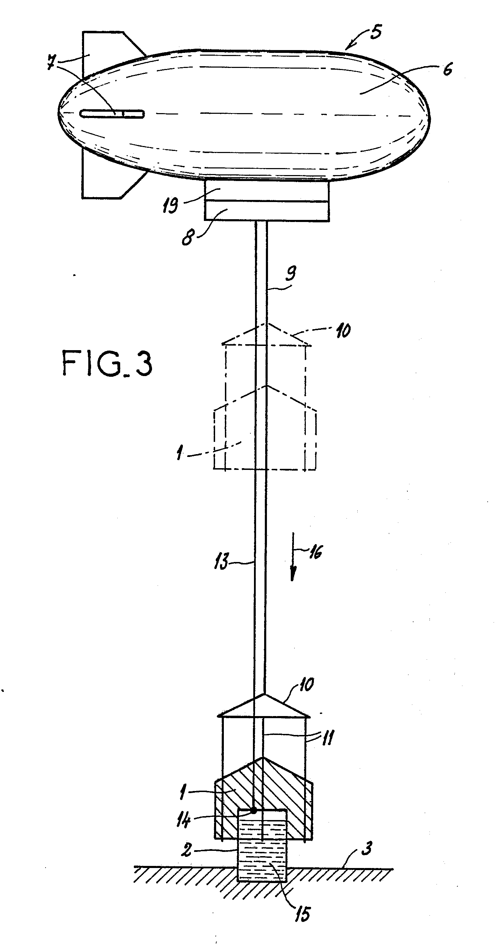

Lorsque l'aérostat 5 parvient au-dessus du site définitif du bâtiment 1, des moyens stabilisateurs sont mis en action pour le maintenir en position stationnaire. En outre, comme montré sur la figure 3, un câble de guidage et de retenue 13 est descendu sous l'aérostat 5, et ancré en un point fixe 14 situé sur la cuve 2. Selon une caractéristique essentielle du procédé, cette cuve 2 a été préalablement remplie d'un volume d'eau 15, dont la masse correspond sensiblement à celle du bâtiment 1.

L'aérostat 5 restant en position stationnaire, à une certaine hauteur au-dessus de la cuve 2, le treuil est actionné de manière à faire descendre le palonnier 10, donc le bâtiment 1, comme indiqué par la flèche 16 de la figure 3. La bâtiment 1, guidé par le câble précité 13, est ainsi descendu et posé en position convenablement centrée sur la cuve 2.

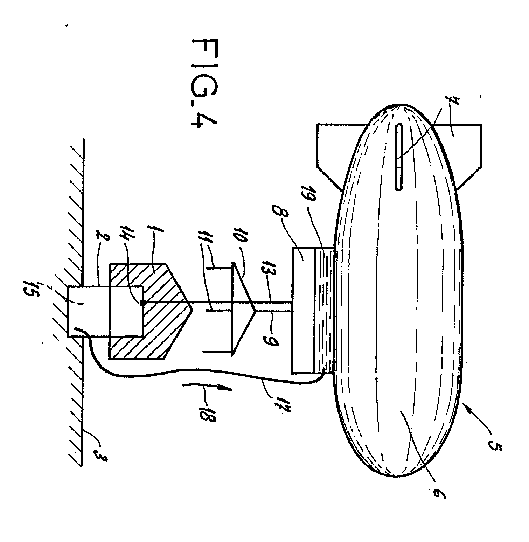

Le bâtiment 1 est alors décroché des élingues 11, le palonnier 10 est remonté, et l'aérostat 5 descend plus bas, jusqu'à venir directement au-dessus du bâtiment 1, comme le montre la figure 4, pour prélever l'eau 15 contenue dans la cuve 2. A cet effet, un conduit flexible 17 est déroulé depuis l'aérostat 5 et raccordé à la cuve 2. L'eau 15 contenue dans cette cuve 2 est aspirée dans le conduit 17, comme indiqué par une flèche 18, et cette eau prélevée est admise dans un ballast 19 de l'aérostat 5.

Enfin, le câble de guidage et de retenue 13 est détaché de la cuve 2, de sorte que l'aérostat 5 se trouve libéré. le poids du bâtiment 1 est désormais remplacé, sur l'aérostat 5, par le poids équivalent de l'eau 15 prélevée dans la cuve 2 et remplissant le ballast 19. L'aérostat 5 peut ainsi repartir sans difficulté vers son point de départ.

Le bâtiment 1 peut ensuite être achevé, notamment par réalisation des raccordements entre ce bâtiment 1 et la cuve 2.

Un tel procédé de transport de bâtiments permet l'érection de bâtiments sur des sites difficilement accessibles par les moyens de transport terrestres ou maritimes : sites de montagne, terrains marécageux, petites îles,... La mise en oeuvre du procédé peut aussi se justifier économiquement pour la construction industrialisée de bâtiments dans des sites quelconques, notamment dans le cas de reconstruction de bâtiments à effectuer dans un temps très court, par exemple à la suite de catastophes naturelles.

Bien entendu, le même procédé est applicable quelles que soient les formes et dimensions du bâtiment 1 et de la cuve 2. Dans le cas de bâtiments de dimensions importantes donc de poids élevé, le procédé reste évidemment applicable à des parties de bâtiments préconstruites, qui sont juxtaposées pour constituer ensemble un bâtiment complet. Enfin, ce procédé s'applique naturellement à des bâtiments de destination quelconque, qu'il s'agisse d'habitations ordinaires ou de bâtiments à vocation particulière, tels que des refuges de haute montagne.

Il va donc de soi que l'invention ne se limite pas au seul mode de mise en oeuvre de ce procédé pour le transport aérien de bâtiments préconstruits qui a été décrit ci-dessus, à titre d'exemple ; elle en embrasse, au contraire, toutes les variantes respectant le même principe, quelles qu'en soient, notamment, les applications particulières.

## Revendications

1. Procédé pour le transport aérien de bâtiments préconstruits, avec utilisation d'un aérostat (5) sous lequel est suspendu le bâtiment (1) à transporter, caractérisé en ce que le bâtiment (1) est posé par l'aérostat (5) sur au moins une cuve (2) servant de fondation à ce bâtiment (1) et installée ou construite sur le sol (3), qui a été remplie préalablement d'eau (15), et en ce qu'au moment de la pose du bâtiment (1) sur la cuve (2), une quantité d'eau (15) correspondant sensiblement à la masse du bâtiment (1) est prélevée dans la cuve (2) et chargée dans ou sous l'aérostat (5), pour constituer la charge de retour de l'aérostat.

2. Procédé pour le transport aérien de bâtiments préconstruits selon la revendication 1, caractérisé en ce que, lorsque l'aérostat (5) parvient au-dessus du site définitif du bâtiment (1), un câble de guidage et de retenue (13) est descendu sous l'aérostat (5), et ancré en un point fixe (14) situé sur la cuve (2) préalable-ment rempli d'eau (15).

3. Procédé pour le transport aérien de bâtiments préconstruits selon la revendication 2, caractérisé en ce que le bâtiment (1) est decendu et posé sur la cuve (2), en étant guidé par le câble précité (13), tandis que l'aérostat (5) reste en position stationnaire à une certaine hauteur au-dessus de la cuve (2), et en ce que l'aérostat (5) descend ensuite plus bas, jusqu'à venir directement au-dessus du bâtiment (1), pour prélever l'eau (15) contenue dans la cuve (2).

4. Procédé pour le transport aérien de bâtiments préconstruits selon l'une quelconque des revendications 1 à 3, caractérisé en ce que l'eau (15) contenue dans la cuve (2) est aspirée dans un conduit (17) déroulé depuis l'aérostat (5), et en ce que cette eau prélevée est admise dans un ballast (19) de l'aérostat.

0282425

FIG.1

FIG.2

0282425

FIG.3

FIG.4

**Office européen des brevets**

**RAPPORT DE RECHERCHE EUROPEENNE**

Numero de la demande

EP 88 42 0072

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | FR-A-2 132 610 (FELCIAI) <br> * En entier * <br> --- | 1,4 | E 04 B 1/35 <br> B 64 B 1/00 |
| Y | US-A-3 017 138 (FLINT) <br> * Colonne 2, ligne 42 - colonne 3, ligne 18; colonne 5, lignes 3-28; figures 1-4 * <br> --- | 1,4 | |
| Y,D | FR-A-2 524 124 (PHENOL ENGINEERING) <br> * Page 4, lignes 1-8; figure 1 * <br> --- | 1,4 | |
| A | FR-A-1 282 164 (GAUDRY et al.) <br> * En entier * <br> ----- | 2,3 | |

DOMAINES TECHNIQUES RECHERCHES (Int. Cl.4)

E 04 B
B 64 B

**Le présent rapport a été établi pour toutes les revendications**

| Lieu de la recherche | Date d'achèvement de la recherche | Examinateur |
|---|---|---|
| LA HAYE | 03-06-1988 | PORWOLL H.P. |